(19) Europäisches Patentamt / European Patent Office / Office européen des brevets

(11) **EP 4 424 620 A1**

(12) **EUROPEAN PATENT APPLICATION**
published in accordance with Art. 153(4) EPC

(43) Date of publication:
**04.09.2024   Bulletin 2024/36**

(21) Application number: **22886476.5**

(22) Date of filing: **08.09.2022**

(51) International Patent Classification (IPC):
**B65G 61/00** (2006.01)

(52) Cooperative Patent Classification (CPC):
**G06Q 10/08355; G06Q 10/04; G06Q 10/047;
G06Q 10/08; G06Q 10/083; G06Q 10/0833**

(86) International application number:
**PCT/JP2022/033794**

(87) International publication number:
**WO 2023/074142 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **29.10.2021   US 202117514386**

(71) Applicant: **AISIN CORPORATION
Kariya-shi, Aichi 448-8650 (JP)**

(72) Inventors:
• **IDE, Takanori
  Kariya-shi, Aichi 448-8650 (JP)**
• **KAGAWA, Takeshi
  Kariya-shi, Aichi 448-8650 (JP)**
• **KAMIYA, Kazumitsu
  Kariya-shi, Aichi 448-8650 (JP)**
• **SANCHES, Fabio
  San Francisco, California 94112 (US)**
• **WEINBERG, Sean
  Santa Barbara, California 93103 (US)**

(74) Representative: **TBK
Bavariaring 4-6
80336 München (DE)**

(54) **INFORMATION PROCESSING DEVICE, INFORMATION PROCESSING METHOD, AND INFORMATION PROCESSING PROGRAM**

(57)    An information processing apparatus according to an embodiment is used for delivery of a plurality of objects by a plurality of mobile structures among a plurality of logistics centers, a plurality of depositories, and a plurality of delivery destinations, the apparatus comprising: a computing unit configured to compute, by using a mathematical model, at least the number of the plurality of mobile structures to be used for delivery of the plurality of objects, mobile-structure route information including logistics centers, depositories, and delivery destinations in which each of the plurality of mobile structures engages, a total volume of the objects that each of the plurality of mobile structures delivers, and a load handling time of each of the plurality of mobile structures, the load handling time corresponding to the mobile-structure route information, wherein the mathematical model is given, as inputs, at least location information of each of the plurality of logistics centers, the plurality of depositories, and the plurality of delivery destinations, delivery-object information including a quantity, a collecting location, and a delivery destination of each of the plurality of objects to be delivered per day, delivery-time information representing delivery times at two locations, selected from the plurality of logistics centers, the plurality of depositories, and the plurality of delivery destinations, on each permutation route, and maximum loading-capacity information of each of the plurality of mobile structures; and an output unit configured to output the number of the plurality of mobile structures, the mobile-structure route information, the total volume, and the load handling time.

**(Cont. next page)**

# FIG.5

START

ACQUIRE LOCATION INFORMATION, DELIVERY-OBJECT INFORMATION, DELIVERY-TIME INFORMATION, AND MAXIMUM TRUCK CAPACITY ~S1

COMPUTATION BY QUANTUM COMPUTER USING MATHEMATICAL MODEL, INCLUDING SETTING PARAMETERS D, T, L, AND $D_n$, NUMBER OF TRUCKS, TOTAL VOLUME OF COMPONENTS ON EACH TRUCK, AND DELIVERY ROUTES AND LOAD HANDLING TIME OF EACH TRUCK ~S2

OUTPUT NUMBER OF TRUCKS, TOTAL VOLUME OF COMPONENTS ON EACH TRUCK, AND DELIVERY ROUTES AND LOAD HANDLING TIME OF EACH TRUCK ~S3

COMPUTE TRAVEL TIME AND LOADING CAPACITY OF EACH TRUCK ~S4

OUTPUT RESULT OF COMPUTATION ~S5

END

**Description**

FIELD

Embodiments described herein relate generally to an information processing apparatus, an information processing method, and an information processing program.

BACKGROUND

A technique of automatically creating a load delivery plan for trucks or another kind of vehicles using a computer is available. Such a technique may deal with an enormous number of combinations of delivery routes with respect to a large number of locations including logistics centers, repositories and depositories that house goods and objects, and delivery destinations such as factories.

To calculate an efficient route from among such an enormous number of combinations of delivery routes using a computer, the computer is subjected to a large amount of computational load, and thus requires a large amount of computation time. Further, it may not be able to automatically calculate, for example, the optimal number of trucks or other vehicles to be used for delivery in a traditional manner.

CITATION LIST

Patent Literature

Patent Literature 1: JP 4116478 B
Patent Literature 2: JP 5678563 B

SUMMARY OF THE INVENTION

Problem to be Solved by the Invention

The present invention aims to provide an information processing apparatus, an information processing method, and an information processing program, each being capable of automatically calculating, in a small amount of time, the number of tracks or the like used for delivery and a delivery route such as each track or the like.

Means for Solving Problem

An information processing device according to an embodiment is, for example, used for delivery of a plurality of objects by a plurality of mobile structures among a plurality of logistics centers, a plurality of depositories, and a plurality of delivery destinations, the apparatus including: a computing unit configured to compute, by using a mathematical model, at least, the number of the plurality of mobile structures to be used for delivery of the plurality of objects, mobile-structure route information including logistics centers, depositories, and delivery destinations in which each of the plurality of mobile structures engages, a total volume of the objects that each of the plurality of mobile structures delivers, and a load handling time of each of the plurality of mobile structures, the load handling time corresponding to the mobile-structure route information, wherein the mathematical model is given, as inputs, at least location information of each of the plurality of logistics centers, the plurality of depositories, and the plurality of delivery destinations, delivery-object information including a quantity, a collecting location, and a delivery destination of each of the plurality of objects to be delivered per day, delivery-time information representing delivery times at two locations, selected from the plurality of logistics centers, the plurality of depositories, and the plurality of delivery destinations, on each permutation route, and maximum loading-capacity information of each of the plurality of mobile structures; and an output unit configured to output the number of the plurality of mobile structures, the mobile-structure route information, the total volume, and the load handling time.

According to this configuration, the user can easily grasp the number of moving bodies used for delivery, the total value of the volume of the box to be delivered by each moving body, the delivery route of each moving body, and the cargo handling time of each moving body with high accuracy only by grasping positional information or the like of a base such as a plurality of physical distribution centers. Also, the number of vehicles used for delivery obtained by calculation can be reduced compared to the number of tracks conventionally used for delivery. The variation of the delivery path of each mobile obtained by the calculation increases compared to the prior art. Therefore, the delivery processing of the parts using the movable body can be further optimized and be performed more efficiently. As a result, the cost in the delivery process can be reduced and the carbon dioxide generated in the delivery process can be reduced.

In the information processing apparatus according to an embodiment, for example, the computing unit is configured to use the mathematical model including, as a reward, a load cost of each of the plurality of mobile structures between two locations selected from the plurality of logistics centers, the plurality of depositories, and the plurality of delivery destinations.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is configured to use the mathematical model including, as a penal rule, a temporal cost of each of the plurality of mobile structures between two locations selected from the plurality of logistics centers, the plurality of depositories, and the plurality of delivery destinations.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is configured to use the mathematical model including, as a penal rule, a condition that a load of each of the plurality of mobile structures between two locations, selected from the plurality of logistics centers, the plurality of depositories, and the plurality of delivery destinations, is less than a criterion.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is configured to use the mathematical model including, as a reward, a condition for delivering two or more of the plurality of objects to one or more of the plurality of logistics centers or depositories on a route to each of the plurality of delivery destinations.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is configured to use the mathematical that is further given an input of an operating time of each of the plurality of mobile structures.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is configured to use the mathematical model that is further given an input of the load handling time of each of the plurality of mobile structures.

According to this configuration, a mathematical model including new parameters that are not conventionally considered can be used to calculate the optimization process. As a result, in comparison with the prior art, further optimization and efficiency can be achieved in the delivery process of parts using tracks.

In the information processing apparatus according to an embodiment, for example, the computing unit is further configured to compute the number of the plurality of mobile structures, the total volume, the mobile-structure route information, and the load handling time by annealing using the mathematical model.

According to this configuration, even if the calculation amount of the optimization in the delivery processing becomes huge, the number of tracks used for delivery can be calculated quickly and without any burden.

In the information processing apparatus according to an embodiment, for example, the computing unit is further configured to compute a travel time of each of the plurality of mobile structures, and the output unit is configured to output the travel time of each of the plurality of mobile structures.

According to this configuration, the user can obtain new detailed information in the delivery processing of the parts using the truck. As a result, in comparison with the prior art, further optimization and efficiency can be achieved in the delivery process of parts using tracks.

In the information processing apparatus according to an embodiment, for example, the computing unit is further configured to compute a loading capacity of each of the plurality of mobile structures, and the output unit is configured to output the loading capacity of each of the plurality of mobile structures.

According to this configuration, the user can obtain new detailed information in the delivery processing of the parts using the truck. As a result, in comparison with the prior art, further optimization and efficiency can be achieved in the delivery process of parts using tracks.

An information processing method according to an embodiment is, for example, used for delivery of a plurality of objects by a plurality of mobile structures among a plurality of logistics centers, a plurality of depositories, and a plurality of delivery destinations, the method including: computing, by using a mathematical model, at least the number of the plurality of mobile structures to be used for delivery of the plurality of objects, mobile-structure route information including logistics centers, depositories, and delivery destinations in which each of the plurality of mobile structures engages, a total volume of the objects that each of the plurality of mobile structures delivers, and a load handling time of each of the plurality of mobile structures, the load handling time corresponding to the mobile-structure route information, wherein the mathematical model is given, as inputs, at least location information of each of the plurality of logistics centers, the plurality of depositories, and the plurality of delivery destinations, delivery-object information including a quantity, a collecting location, and a delivery destination of each of the plurality of objects to be delivered per day, delivery-time information representing delivery times at two locations, selected from the plurality of logistics centers, the plurality of depositories, and the plurality of delivery destinations, on each permutation route, and maximum loading-capacity information of each of the plurality of mobile structures; and outputting the number of the plurality of mobile structures, the mobile-structure route information, the total volume, and the load handling time.

According to this configuration, the user can easily grasp the number of moving bodies used for delivery, the total value of the volume of the box to be delivered by each moving body, the delivery route of each moving body, and the cargo handling time of each moving body with high accuracy only by grasping positional information or the like of a base such as a plurality of physical distribution centers. Also, the number of vehicles used for delivery obtained by calculation can be reduced compared to the number of tracks conventionally used for delivery. The variation of the delivery path of each mobile obtained by the calculation increases compared to the prior art. Therefore, the delivery processing of the parts using the movable body can be further optimized and be performed more efficiently. As a result, the cost in the delivery process can be reduced and the carbon dioxide generated in the delivery process can be reduced.

An information processing program according to an embodiment is, for example, used for delivery of a plurality of objects by a plurality of mobile structures among a plurality of logistics centers, a plurality of depositories, and a plurality of delivery destinations, the information processing program causing a computer to implement: a computational function to compute, by using a mathematical model, at least the number of the plurality of mobile structures to be used for delivery of the plurality of objects, mobile-structure route information including logistics centers, depositories, and delivery destinations in which each of the plurality of mobile structures engages, a total volume of the objects that each of the plurality of mobile structures delivers, and a load handling time of each of the plurality of mobile structures, the load handling time corresponding to the mobile-structure route information, wherein the mathematical model is given, as inputs, at least location information of each of the plurality of logistics centers, the plurality of depositories, and the plurality of delivery destinations, delivery-object information including a quantity, a collecting location, and a delivery destination of each of the plurality of objects to be delivered per day, delivery-time information representing delivery times at two locations, selected from the plurality of logistics centers, the plurality of depositories, and the plurality of delivery destinations, on each permutation route, and maximum loading-capacity information of each of the plurality of mobile structures; and an output function to output the number of the plurality of mobile structures, the mobile-structure route information, the total volume, and the load handling time.

According to this configuration, the user can easily grasp the number of moving bodies used for delivery, the total value of the volume of the box to be delivered by each moving body, the delivery route of each moving body, and the cargo handling time of each moving body with high accuracy only by grasping positional information or the like of a base such as a plurality of physical distribution centers. Also, the number of vehicles used for delivery obtained by calculation can be reduced compared to the number of tracks conventionally used for delivery. The variation of the delivery path of each mobile obtained by the calculation increases compared to the prior art. Therefore, the delivery processing of the parts using the movable body can be further optimized and be performed more efficiently. As a result, the cost in the delivery process can be reduced and the carbon dioxide generated in the delivery process can be reduced.

BRIEF DESCRIPTION OF DRAWINGS

FIG. 1 illustrates an exemplary structure of an information processing apparatus according to an embodiment.
FIG. 2 illustrates exemplary location information as input information with respect to the information processing apparatus in an embodiment.
FIG. 3 illustrates exemplary delivery-object information as input information with respect to the information processing apparatus in an embodiment.
FIG. 4 illustrates exemplary delivery-time information as input information with respect to the information processing apparatus in an embodiment.
FIG. 5 is a flowchart illustrating exemplary information processing to be executed by the information processing apparatus in an embodiment.

FIG. 6 illustrates exemplary delivery routes of two or more trucks that the information processing apparatus outputs in an embodiment.

FIG. 7 illustrates exemplary delivery-route information representing a delivery route of each truck.

FIG. 8 illustrates exemplary delivery-plan information of a certain truck.

FIG. 9 illustrates a bar chart depicting a delivery time of each truck.

FIG. 10 illustrates a bar chart depicting a loading capacity of each truck.

FIG. 11 illustrates exemplary delivery routes of two or more trucks as a comparative example.

DETAILED DESCRIPTION

Hereinafter, exemplary embodiments of the present invention will be described in detail with reference to the accompanying drawings. Structures and elements and actions, results, and effects attained by such structures and elements are presented for illustrative purpose only. Such embodiments are attainable by structures and elements other than those described below. The embodiments can achieve at least one of various effects attained by the basic structures and elements and their derivative effects.

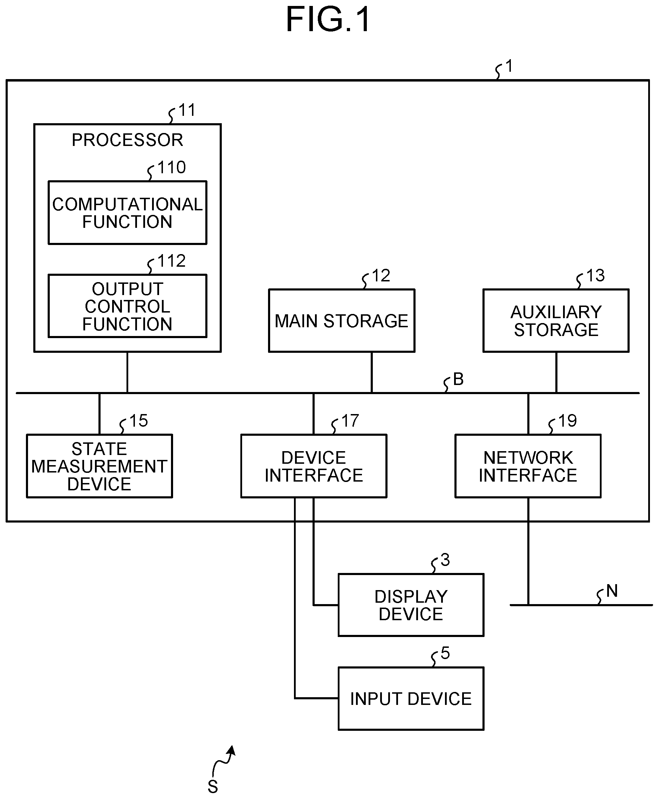

FIG. 1 illustrates an exemplary structure of an information processing system S including an information processing apparatus 1 and an exemplary hardware configuration of the information processing apparatus 1 according to one embodiment. As illustrated in FIG. 1, the information processing system S includes the information processing apparatus 1, a display device 3, and an input device 5.

The display device 3 can be, for example, a display such as a liquid crystal display (LCD), a cathode ray tube (CRT), a plasma display panel (PDP), or an organic electro luminescence (EL). The display device 3 serves to display, in a given form, various kinds of information computed by the information processing apparatus 1, under the control of the information processing apparatus 1.

The input device 5 serves to receive various kinds of instructions and information inputs from the user. The input device 5 can be implemented by, for example, a trackball, a switch button, a mouse, a keyboard, a touch pad that allows the user to touch the operation surface for inputs, a touch screen as an integration of a display screen and a touch pad, a non-contact input circuit including an optical sensor, or an audio input circuit.

The information processing apparatus 1 has a same or like hardware configuration as a general computer. To deliver a plurality of objects by two or more mobile structures among two or more logistics centers, two or more depositories, and two or more delivery destinations, the information processing apparatus 1 performs a delivery optimization process using a mathematical model to compute the number of mobile structures to be used for the delivery, for example. The mathematical model and the delivery optimization process will be described in detail later.

Herein, the two or more mobile structures that delivers two or more objects are defined to be trucks for the sake of specific explanation. In addition, the objects to be delivered can be any objects, however, they are defined to be mechanical components (hereinafter, also simply referred to as components) for the sake of specific explanation.

The logistics center refers to a place where objects to be delivered such as components are stored, and sorted and managed. The depository refers to a place or a store where objects to be delivered such as components are stored. The delivery destination refers to a place where objects such as components are to be delivered. Examples of the delivery destination includes a factory that receives delivery of components, for example, by truck to manufacture products, and an airport and a seaport from which components delivered by truck are carried to a remote location. Herein, the logistics centers, the depositories, and the delivery destinations may be each referred to as a site.

The delivery of components according to the present embodiment requires load handling in at least any of the sites as the logistics centers, the depositories, and the delivery destinations. Load handling refers to work including at least any of opening or closing of a truck box, a driver's walk to a reception or else in each location, a reception process, and loading or unloading of components with a lift, for example. Also, the trucks for use in delivery can be parked in any of the logistics centers, the depositories, and the delivery destinations as a garage.

The information processing apparatus 1 includes a processor 11, a main storage 12, an auxiliary storage 13, a state measurement device 15, a device interface 17, and a network interface 19. The processor 11, the main storage 12, the auxiliary storage 13, the state measurement device 15, the device interface 17, and the network interface 19 are connected to one another via a bus B.

The processor 11 serves as processing circuitry that collectively controls the information processing apparatus 1, and the display device 3 and the input device 5 connected to the information processing apparatus 1. Specifically, examples of the processor 11 include an electronic circuit including a controller and a calculator of a computer, such as a central processing unit (CPU), a graphics processing unit (GPU), an application specific integrated circuit (ASIC), and a field programmable gate array (FPGA). The processor 11 may also be implemented by optical circuitry including an optical logical element.

The processor 11 further includes a computational function 110 and an output control function 112.

The computational function 110 serves to receive a result of computation of the number of trucks to be used for delivery and other information from the state measurement device 15 to compute a delivery travel time and a loading capacity of each truck for the delivery from the result of computation. The computational function 110 is an exemplary computing unit.

The output control function 112 serves to cause the display device 3 through the device interface 17 to display the result of computation such as the number of trucks. The output control function 112 is an exemplary output.

The computational function 110 and the output control function 112 of the processor 11 are, for instance, in the form of computer executable program and stored in the main storage 12. Specifically, the processor 11 reads and executes programs from the main storage 12 to implement the functions corresponding to the programs. In other words, after reading the respective programs, the processor 11 includes the computational function 110 and the output control function 112, as illustrated inside the processor 11 of FIG. 1. Thus, the computational function 110 and the output control function 112 of the processor 11 are implemented by a classical logical computer (or classical Turing computer).

The main storage 12 serves to store therein commands to be executed by the processor 11 and various kinds of data, for example. The processor 11 reads information from the main storage 12.

The auxiliary storage 13 represents storage other than the main storage 12.

The main storage 12 and the auxiliary storage 13 represent any electronic components capable of storing electronic information. The main storage 12 and the auxiliary storage 13 may be semiconductor memories. The main storage 12 and the auxiliary storage 13 typically include a semiconductor memory device such as a random access memory (RAM) or a flash memory, a hard disk, or an optical disk. The main storage 12 and the auxiliary storage 13 may include a portable medium such as a universal serial bus (USB) drive or a digital versatile disk (DVD).

Specifically, the main storage 12 or the auxiliary storage 13 stores therein at least location information, delivery-object information, and delivery-time information.

Herein, the location information refers to information representing a location (e.g., latitude and longitude) of each of the two or more logistics centers, the two or more depositories, and the two or more delivery destinations. The delivery-object information refers to information including a quantity, a collecting location, and a delivery destination of each of objects to be delivered per day. The delivery-time information refers to information representing delivery times at two locations (sites), selected from the two or more logistics centers, the two or more depositories, and the two or more delivery destinations, on each permutation route. With respect to two selected sites A and B, the permutation route refers to two routes, i.e., a route A to B and a route B to A, set by permutation.

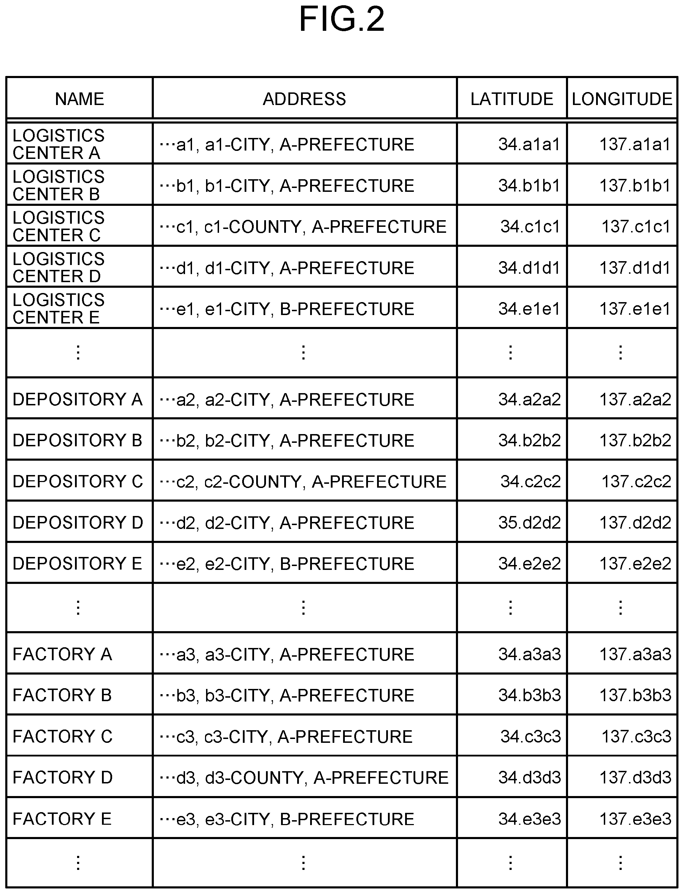

FIG. 2 illustrates exemplary location information stored in the main storage 12. As illustrated in FIG. 2, the location information represents locations (addresses) of the respective logistics centers, depositories, and delivery destinations by latitude and longitude. The main storage 12 stores therein the location information in table format, for example, as illustrated in FIG. 2. Latitude and longitude are an example of the location information. The location information may be any information as long as it allows identification of the location of each logistics center, each depository, and each delivery destination.

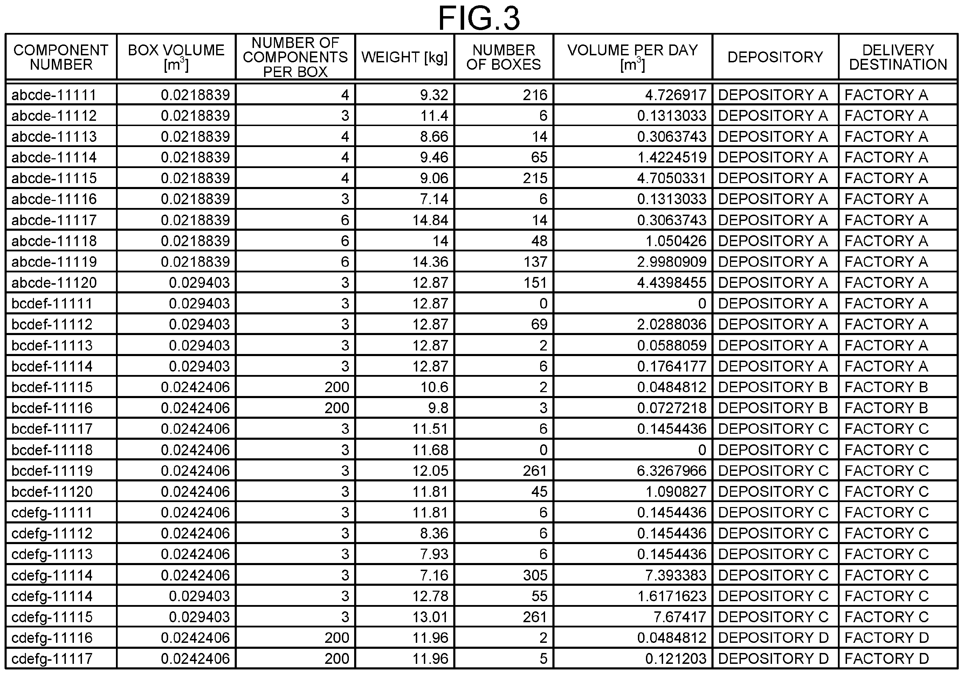

FIG. 3 illustrates exemplary delivery-object information stored in the main storage 12. FIG. 3 depicts delivery-object information in table format as to delivery of each component from a logistics center A to a factory A in a given day, by way of example. The delivery-object information table shows "box volume", "number of components per box", "weight", "number of boxes", "volume per day", "depository" as a collecting location, and "delivery destination" with respect to each component identified by "component number". The box volume represents a volume of a box that accommodates components. The number of components per box represents the number of components in each box. The weight represents the weight of components to be delivered. The number of boxes represents the number of boxes containing the components to be delivered per day. The volume per day represents a volume of the number of boxes to be delivered per day.

By referring to the delivery-object information table, it is possible to calculate the total number of components, the total number of boxes, the total volume, and the total weight relative to components to be delivered from the logistics center A to the factory A in a given day.

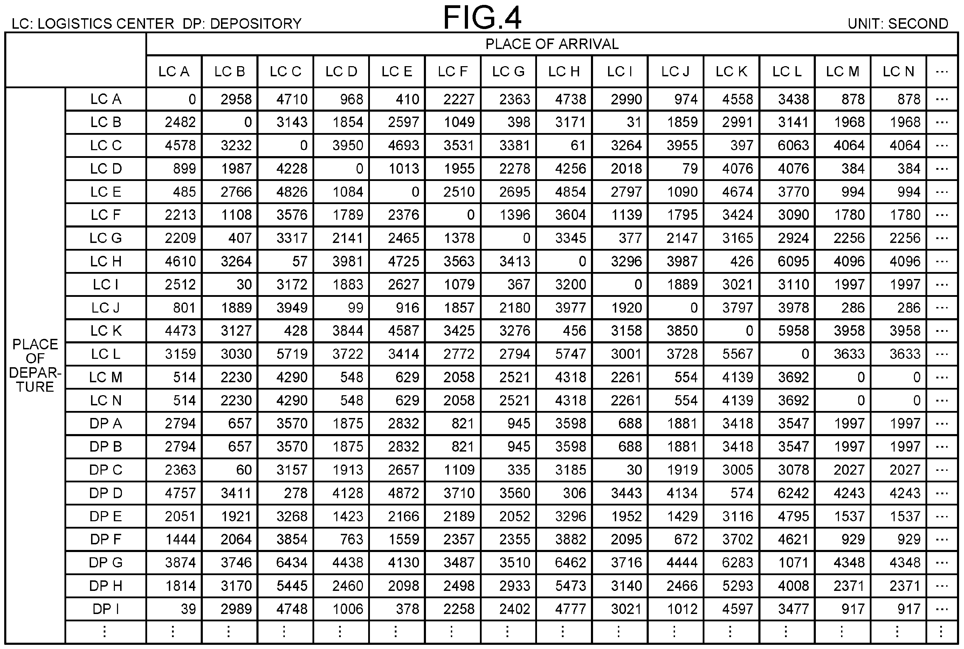

FIG. 4 illustrates exemplary delivery-time information stored in the main storage 12. As illustrated in FIG. 4, the delivery-time information represents a length of time taken for traveling on the permutation routes between two sites, selected from the two or more logistics centers, the two or more depositories, and the two or more delivery destinations. Note that in FIG. 4 "LC" denotes logistics center, and "DP" denotes depository.

The state measurement device 15 is, for example, a quantum annealing computer and serves to perform the delivery optimization process using a mathematical model. The state measurement device 15 is an exemplary computing unit.

Herein, the delivery optimization process refers to a process of computing at least the number of trucks to be used for delivery, mobile-structure route information, a total volume of components that each truck delivers, and a load handling time, using a mathematical model which is given inputs of at least the location information, the delivery-object information, the delivery-time information, and a maximum truck capacity.

The mobile-structure route information refers to information including logistics centers, depositories, and delivery destinations in which the two or more trucks individually engage. Specifically, the mobile-structure route information represents the logistics centers, depositories, and delivery destinations where the individual trucks have the components loaded or unloaded, and estimated times of arrival there in association with each other, and includes delivery routes of the individual trucks. The total volume of components that each truck delivers refers to, for example, a total volume of boxes to be loaded on each truck for delivery. The load handling time refers to information including at least a length of time required for handling load at the logistics centers, the depositories, and the delivery destinations according to the mobile-structure route information of each of the trucks.

The mathematical model for use in the delivery optimization process (hereinafter, also referred to as delivery-optimization mathematical model) is now described.

The delivery-optimization mathematical model can be formulated by the following Expressions (1) to (6):

$$\min_{x_{t,i} \in \{0,1\}} (-DH_1 + TH_2 + LH_3 + LH_4 - D_n H_5) \tag{1}$$

$$H_1 = \sum_{i,j,t} w_{ij} x_{i,t} x_{j,t+1} \tag{2}$$

$$H_2 = \sum_{i,j,t} t_{ij} x_{i,t} x_{j,t+1} \tag{3}$$

$$H_3 = \sum_{t} \left(1 - \sum_{i} x_{i,t}\right)^2 \tag{4}$$

$$H_4 = \sum_{i,j,t} x_{i,t} x_{j,t+1} \left(\sum_{n} x_{i,t+1+n} x_{j,t+2+n}\right) \tag{5}$$

$$H_5 = \sum_{i,j,t} w_{ij} x_{i,t} x_{j,t+n} \tag{6}$$

Expression (1) represents an objective function of the delivery-optimization mathematical model, where $H_1$, $H_2$, $H_3$, $H_4$, and $H_5$ are represented by Expressions (2), (3), (4), (5), and (6), respectively.

In Expressions (1) to (6) the indexes i and j are for distinguishing among the two or more logistics centers, the two or more depositories, and the two or more delivery destinations (i.e., sites). In a graph depicting a quadratic unconstrained binary optimization (QUBO) problem with a model following Expression (1), the sites, that is, the two or more logistics centers, the two or more depositories, and the two or more delivery destinations correspond to the vertexes on the graph. That is, the indexes i and j are for distinguishing the vertexes on the graph representing the model according to Expression (1).

Further, the indexes t and n denote time. $x_{it}$ denotes a variable of zero or one. When a truck is located at a site "i" at time t, $x_{it} = 1$. In other situations $x_{it} = 0$. $w_{ij}$ denotes a (travel) distance between a site "i" and a site "j". D, T, L, and $D_n$ denote variables (parameters) for minimizing the objective function represented by Expression (1).

Hi defined by Expression (2) is a reward term representing a reward corresponding to a load cost of a truck traveling between the two vertexes i and j.

$H_2$ defined by Expression (3) is a penalty term representing a monetary penalty corresponding to a cost of a truck traveling between the two vertexes i and j.

$H_3$ defined by Expression (4) is a term representing a condition that the number of sites (vertexes) that any truck can visit at optional time is only one.

$H_4$ defined by Expression (5) is a penalty term representing a monetary penalty corresponding to a condition for giving penalty when the load of a truck is less than a criterion or when the truck redundantly travels between the same pair of sites (for example, an event that track remains at the same site).

$H_5$ defined by Expression (6) is a reward term representing a reward corresponding to a condition that a truck having multiple components with a less volume loaded thereon travels and stops over at multiple sites to unload the components on the route to the final destination.

The state measurement device 15 serves to control the variables D, T, L, and $D_n$ by quantum annealing such that the energy of the physical system represented by the objective function of Expression (1) is to be at a minimum. The state measurement device 15 measures a state of the physical system represented by the objective function of Expression (1) to obtain values of the variables D, T, L, and $D_n$ when the physical system is placed in a minimum energy state (i.e., ground state). The state measurement device 15 computes at least the number of trucks to be used for delivery, a total volume of components that each truck delivers, and mobile-structure route information (delivery route) of each truck, and a load handling time of each truck, using the values of the variables D, T, L, and $D_n$.

Referring back to FIG. 1, the device interface 17 serves to directly or indirectly connect among the display device 3, the input device 5, and the processor 11 via the bus B. The device interface 17 may include a connection terminal such as a USB. Further, the device interface 17 may be connected to an external storage medium or a storage device (memory) through the connection terminal.

The network interface 19 serves to provide wireless or wired connection to a network N. In addition, the network interface 19 allows transmission and reception of information between the information processing apparatus 1 and external devices via the network N.

The following will describe a procedure of the delivery optimization process by way of example.

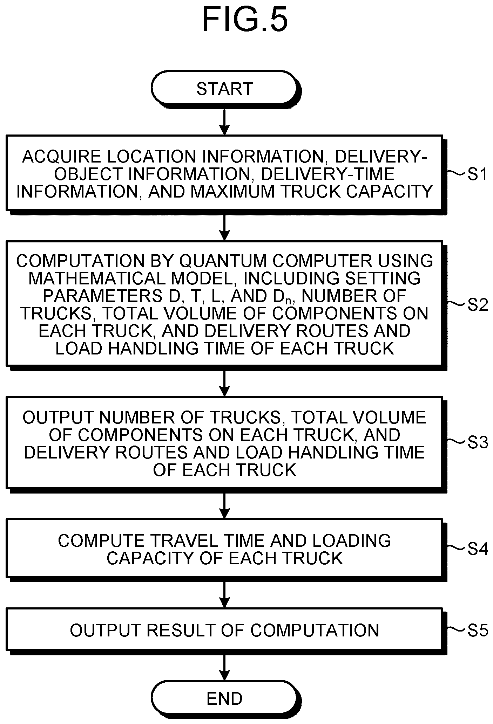

FIG. 5 is a flowchart illustrating a procedure of the delivery optimization process to be performed by the information processing apparatus 1 in an embodiment. As illustrated in FIG. 5, the state measurement device 15 acquires location information, delivery-object information, delivery-time information, and a maximum truck capacity (e.g., 15 t) from the main storage 12 (Step S1).

The state measurement device 15 performs the delivery optimization process with a quantum computer using a mathematical model and inputs of the location information, the delivery-object information, and the delivery-time information. Specifically, the state measurement device 15 sets values of the parameters D, T, L, and $D_n$ when the physical system represented by the objective function of Expression (1) is placed in a minimum energy state. Further, the state measurement device 15 computes the number of trucks to be used for delivery, mobile-structure route information (delivery route) of each truck, a total volume of components that each truck delivers, and a load handling time of each truck, using the set parameter values D, T, L, and $D_n$ (Step S2).

The state measurement device 15 outputs, to the computational function 110, the number of trucks to be used for delivery, the mobile-structure route information of each truck, the total volume of components that each truck delivers, and the load handling time of each truck as obtained through the delivery optimization process (Step S3).

The computational function 110 computes a travel time and a loading capacity of each truck for delivery from the number of trucks to be used for delivery, the mobile-structure route information of each truck, the total volume of components that each truck delivers, and the load handling time of each truck, as received from the state measurement device 15 (Step S4).

The output control function 112 outputs a result of the computation (Step S5). Specifically, the output control function 112 causes, for example, the display device 3 to display the number of trucks to be used for delivery, the mobile-structure route information of each truck, the total volume of components that each truck delivers, the load handling time of each truck, and the travel time and the loading capacity of each truck for delivery.

(Example of Application)

The following will describe the delivery optimization process according to an example of application. In this example, the number of sites was set to 23, and a quantum annealing computer was used to perform the delivery optimization process using inputs of the location information and the other information depicted in FIG. 2. As a result, the number of 15-ton trucks to be used for delivery was computed to be 61.

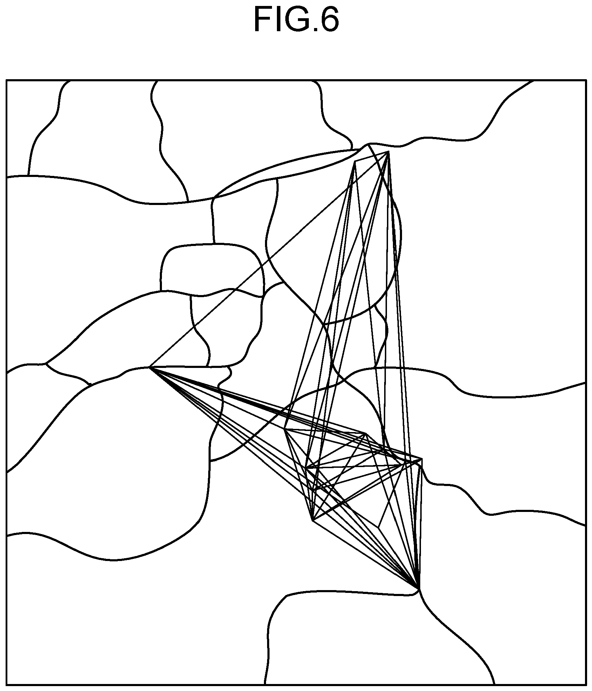

FIG. 6 illustrates delivery routes of the 61 trucks, as computed by the delivery optimization process in the example of application, on a map in a superimposed manner.

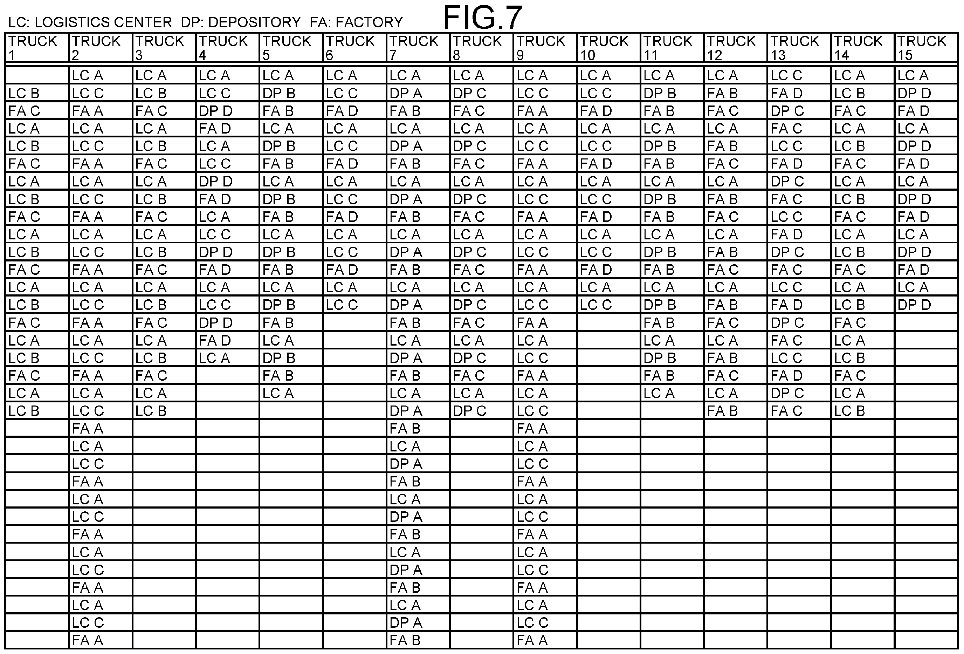

FIG. 7 illustrates exemplary mobile-structure route information as to 15 trucks among the 61 trucks computed by the delivery optimization process. Specifically, in FIG. 7, the sites to which each truck travels are depicted in order from the top of the rows.

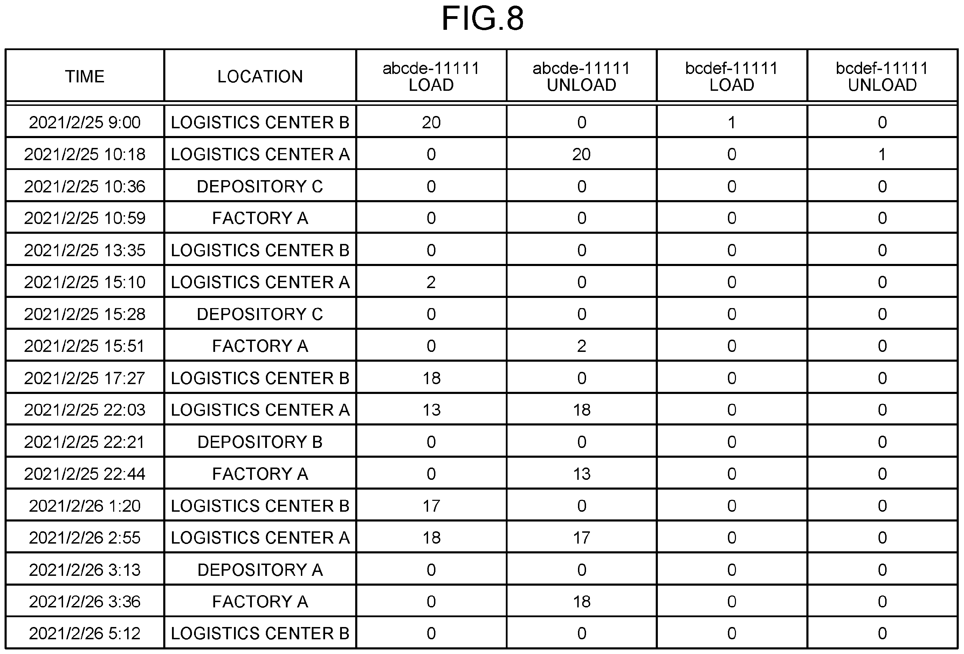

FIG. 8 illustrates exemplary mobile-structure route information (i.e., delivery route) as to one of the 61 trucks computed by the delivery optimization process. As illustrated in FIG. 8, the mobile-structure route information includes sites where the track travels in order and estimated times of arrival there, components to be loaded at each site and the number thereof, and components to be unloaded at each site and the number thereof.

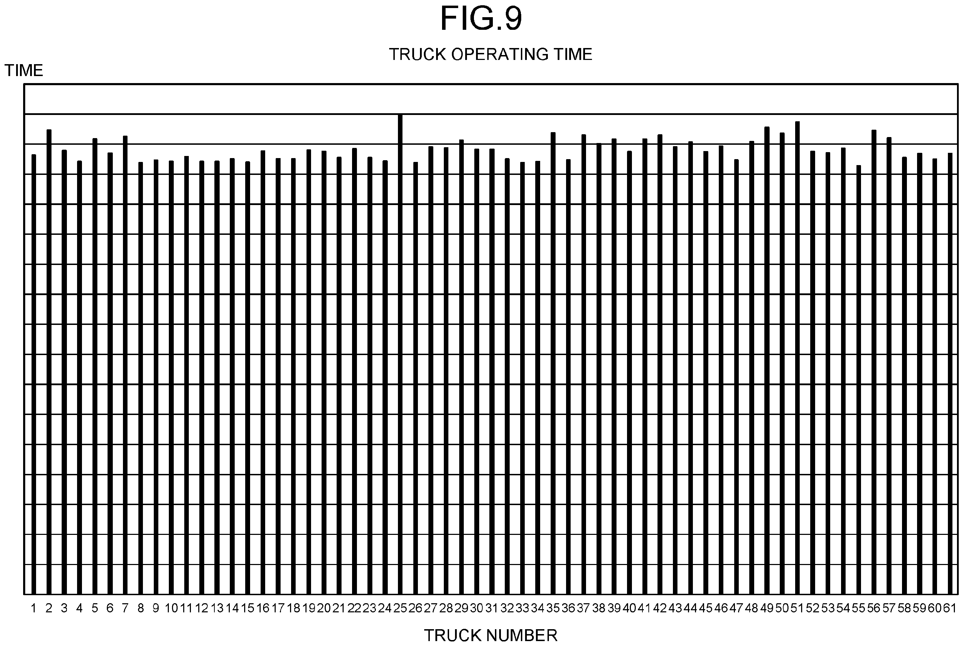

FIG. 9 is a bar chart illustrating an operating time (or travel time) of each of the 61 trucks computed by the delivery optimization process.

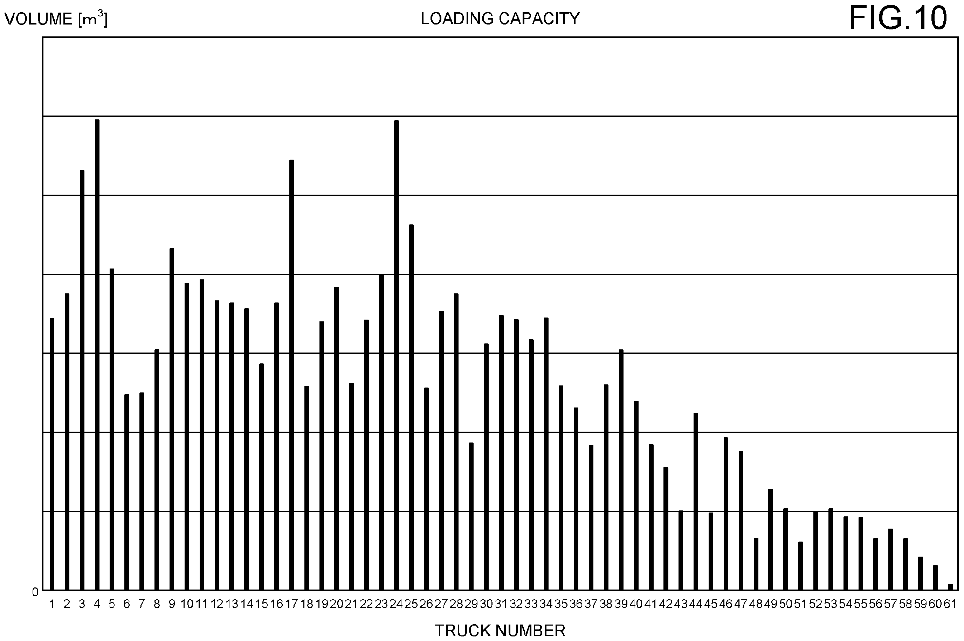

FIG. 10 is a bar chart illustrating a loading capacity of each of the 61 trucks computed by the delivery optimization process.

The user can easily and quickly obtain necessary information for an intended delivery operation by viewing the items of information illustrated in FIGS. 6 to 10 on the screen of the display device 3, for example.

(Comparative Example)

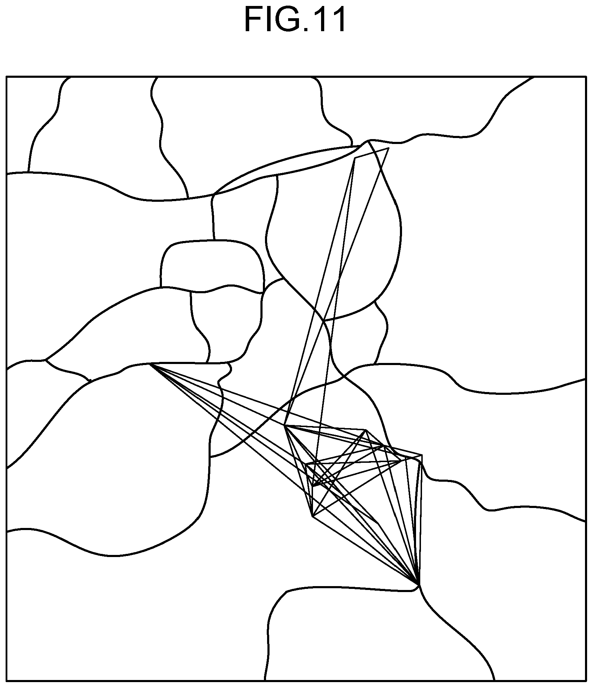

For the sake of comparison, an expert artificially conducted delivery optimization in a traditional manner under the same condition as the example of application. Results of the computation were such that the number of trucks to be used for delivery is sixty 11-ton trucks and eighty-two 15-ton trucks. FIG. 11 illustrates delivery routes of the sixty 11-ton trucks and eighty-two 15-ton trucks, as determined in the comparative example, on a map in a superimposed manner.

Through the comparison between the example of application and the comparative example, it can be seen that the number of trucks to be used for delivery is less and the truck delivery routes are more various in the example of application than in the comparative example.

The information processing apparatus 1 according to some embodiments as described above is applicable to delivery of two or more components by two or more trucks among two or more logistics centers, two or more depositories, and two or more delivery destinations. The information processing apparatus 1 includes the state measurement device 15 as a computing unit and the output control function 112 as an output.

The state measurement device 15 uses a mathematical model that is given inputs of at least: location information of each of the two or more logistics centers, the two or more depositories, and the two or more delivery destinations; delivery-object information including a quantity, a collecting location, a delivery destination of each of two or more components to be delivered per day; delivery-time information representing delivery times at two sites, selected from the two or more logistics centers, the two or more depositories, and the two or more delivery destinations, on each permutation route; and maximum loading-capacity information of each truck. Using the mathematical model, the state measurement device 15 computes at least: the number of trucks to be used for delivery; a total volume of components that each truck delivers; mobile-structure route information including the logistics centers, the depositories, and the delivery destinations in which each truck engages; and a load handling time of each truck, corresponding to the mobile-structure route information. The output control function 112 outputs the number of trucks to be used for delivery, the mobile-structure route information, the total volume of components that each truck delivers, and the load handling time.

Thus, the user can accurately and easily know the number of trucks to be used for an intended delivery, the delivery routes of each truck, the total volume of components that each truck delivers, and the load handling time of each truck by simply obtaining, for example, the location information of the sites such as the two or more logistics centers.

In addition, the number of trucks to be used for delivery computed by the state measurement device 15 is less than that obtained in the traditional manner. Also, the delivery routes of each truck computed by the state measurement device 15 are more various than those obtained in the traditional manner. This consequently makes it possible to optimize the component delivery operation by truck and improve the efficiency thereof. As a result, the cost of the delivery operation and carbon dioxide emission occurring from the delivery operation can be both reduced.

Further, the state measurement device 15 can also use another mathematical model including, as a reward, a truck load cost occurring between two sites selected from the two or more logistics centers, the two or more depositories, and the two or more delivery destinations. The state measurement device 15 can also use another mathematical model including, as a penal rule, a truck temporal cost occurring between two sites selected from the two or more logistics centers, the two or more depositories, and the two or more delivery destinations.

Moreover, the state measurement device 15 can use another mathematical model including, as a penal rule, a condition that the load of a truck traveling between two sites, selected from the two or more logistics centers, the two or more depositories, and the two or more delivery destinations, is less than a criterion. The state measurement device 15 can use another mathematical model including, as a reward, a condition for delivery of two or more components to intended logistics centers or depositories on the route to a delivery destination (that is, a condition for unloading components at multiple locations).

Further, the state measurement device 15 can use another mathematical model that is given additional inputs of a truck operating time and another mathematical model that is given additional inputs of a truck load handling time.

These mathematical models include new parameters which have not been considered heretofore. Because of this, the information processing apparatus 1 can optimize the delivery operation of components by truck and improve the efficiency thereof in comparison with the traditional method.

As an example, if the number of sites is 23, the number of delivery route patterns will be 23! (approximately, $2.58 \times 10^{22}$), which requires an enormous amount of computation for optimizing the delivery operation. The state measurement device 15 can compute a total volume of boxes that each truck delivers, delivery routes and a load handling time of each truck by quantum annealing using the mathematical model. Thereby, the state measurement device 15 can quickly compute the number of trucks to be used for delivery and the other information with less burden, in spite of an enormous amount of computation for optimizing the delivery operation required.

The information processing apparatus 1 further includes the computational function 110 as a computing unit. The computational function 110 is capable of computing the travel time and the loading capacity of each truck. The output control function 112 can output the travel time and the loading capacity of each truck.

Thus, the user can obtain new detailed information as to the component delivery operation by truck. Thereby, the user can optimize the component delivery operation by truck and improve the efficiency thereof in comparison with using the traditional method.

(First Modification)

The above embodiments have described an example that the information processing apparatus 1 includes the state measurement device 15 serving as a quantum annealing computer to perform the delivery optimization process. Alternatively, the state measurement device 15 may be, for example, a simulated annealing computer including semiconductor circuitry having simulated quantum effect.

Alternatively, the state measurement device 15 may be not a quantum annealing computer but a quantum gate computer, for example. The state measurement device 15 may also be a classical logical computer (or classical Turing computer), when appropriate.

(Second Modification)

The above embodiments have described an example that the information processing apparatus 1 incorporates the state measurement device 15 and the computational function 110 as a computing unit that performs the delivery optimization process. Alternatively, the state measurement device 15 may be provided on the cloud, for example, so that the information processing apparatus 1 can communicate with the state measurement device 15 via the network to perform the delivery optimization process.

(Third Modification)

The above embodiments have described an example of performing the delivery optimization process with reference to the location information, the delivery-object information, and the delivery-time information stored in the main storage 12. Alternatively, the information processing apparatus 1 can acquire the location information and the other information from an external device via the network interface 19 to perform the delivery optimization process.

(Fourth Modification)

The above embodiments have described trucks as an example of mobile structures. However, the mobile structures are not limited to the trucks and may be bicycles or drones, for example.

Computer programs for executing information processing in the above embodiments may be recorded and provided in an installable or executable file format on a computer-readable recording medium such as a CD-ROM, a flexible disk (FD), a CD-R, a DVD, or a USB drive. In addition, such computer programs may be provided or distributed via a network such as the Internet. Such computer programs may be incorporated into a ROM or the like in advance.

The computer programs have a module configuration including the functional elements described above. As actual hardware, for example, the CPU (processor circuit) reads and executes the computer programs from the ROM or the HDD to thereby load the respective functional elements into the RAM and generate them on the RAM. The respective functional elements can be partially or entirely implemented by dedicated hardware such as an ASIC or an FPGA.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such embodiments and such forms or modifications as would fall within the scope and spirit of the inventions.

REFERENCE SIGNS LIST

| | |
|---|---|
| 1 | Information processing apparatus |
| 3 | Display device |
| 5 | Input device |
| 11 | Processor |
| 12 | Main storage |
| 13 | Auxiliary storage |
| 15 | State measurement device |
| 17 | Device interface |
| 19 | Network interface |
| 110 B | Bus |
| N | Network |
| S | Information processing system |

**Claims**

1. An information processing apparatus to be used for delivery of a plurality of objects by a plurality of mobile structures among a plurality of logistics centers, a plurality of depositories, and a plurality of delivery destinations, the apparatus comprising:

   a computing unit configured to compute, by using a mathematical model, at least

      the number of the plurality of mobile structures to be used for delivery of the plurality of objects,
      mobile-structure route information including logistics centers, depositories, and delivery destinations in which each of the plurality of mobile structures engages,
      a total volume of the objects that each of the plurality of mobile structures delivers, and
      a load handling time of each of the plurality of mobile structures, the load handling time corresponding to the mobile-structure route information,
      wherein the mathematical model is given, as inputs, at least

         location information of each of the plurality of logistics centers, the plurality of depositories, and the plurality of delivery destinations,
         delivery-object information including a quantity, a collecting location, and a delivery destination of each of the plurality of objects to be delivered per day,
         delivery-time information representing delivery times at two locations, selected from the plurality of logistics centers, the plurality of depositories, and the plurality of delivery destinations, on each permutation route, and
         maximum loading-capacity information of each of the plurality of mobile structures; and

   an output unit configured to output the number of the plurality of mobile structures, the mobile-structure route information, the total volume, and the load handling time.

2. The information processing apparatus according to claim 1, wherein
   the computing unit is configured to use the mathematical model including, as a reward, a load cost of each of the plurality of mobile structures between two locations selected from the plurality of logistics centers, the plurality of depositories, and the plurality of delivery destinations.

3. The information processing apparatus according to claim 1, wherein
   the computing unit is configured to use the mathematical model including, as a penal rule, a temporal cost of each of the plurality of mobile structures between two locations selected from the plurality of logistics centers, the plurality of depositories, and the plurality of delivery destinations.

4. The information processing apparatus according to claim 1, wherein
   the computing unit is configured to use the mathematical model including, as a penal rule, a condition that a load of each of the plurality of mobile structures between two locations, selected from the plurality of logistics centers, the plurality of depositories, and the plurality of delivery destinations, is less than a criterion.

5. The information processing apparatus according to claim 1, wherein
the computing unit is configured to use the mathematical model including, as a reward, a condition for delivering two or more of the plurality of objects to one or more of the plurality of logistics centers or depositories on a route to each of the plurality of delivery destinations.

6. The information processing apparatus according to claim 1, wherein
the computing unit is configured to use the mathematical that is further given an input of an operating time of each of the plurality of mobile structures.

7. The information processing apparatus according to claim 1, wherein
the computing unit is configured to use the mathematical model that is further given an input of the load handling time of each of the plurality of mobile structures.

8. The information processing apparatus according to claim 1, wherein
the computing unit is further configured to compute the number of the plurality of mobile structures, the total volume, the mobile-structure route information, and the load handling time by annealing using the mathematical model.

9. The information processing apparatus according to claim 1, wherein

the computing unit is further configured to compute a travel time of each of the plurality of mobile structures, and
the output unit is configured to output the travel time of each of the plurality of mobile structures.

10. The information processing apparatus according to claim 1, wherein

the computing unit is further configured to compute a loading capacity of each of the plurality of mobile structures, and
the output unit is configured to output the loading capacity of each of the plurality of mobile structures.

11. An information processing method to be used for delivery of a plurality of objects by a plurality of mobile structures among a plurality of logistics centers, a plurality of depositories, and a plurality of delivery destinations, the method comprising:

computing, by using a mathematical model, at least

the number of the plurality of mobile structures to be used for delivery of the plurality of objects,
mobile-structure route information including logistics centers, depositories, and delivery destinations in which each of the plurality of mobile structures engages,
a total volume of the objects that each of the plurality of mobile structures delivers, and
a load handling time of each of the plurality of mobile structures, the load handling time corresponding to the mobile-structure route information,
wherein the mathematical model is given, as inputs, at least

location information of each of the plurality of logistics centers, the plurality of depositories, and the plurality of delivery destinations,
delivery-object information including a quantity, a collecting location, and a delivery destination of each of the plurality of objects to be delivered per day,
delivery-time information representing delivery times at two locations, selected from the plurality of logistics centers, the plurality of depositories, and the plurality of delivery destinations, on each permutation route, and
maximum loading-capacity information of each of the plurality of mobile structures; and

outputting the number of the plurality of mobile structures, the mobile-structure route information, the total volume, and the load handling time.

12. An information processing program used for delivery of a plurality of objects by a plurality of mobile structures among a plurality of logistics centers, a plurality of depositories, and a plurality of delivery destinations, the information processing program causing a computer to implement:

a computational function to compute, by using a mathematical model, at least

the number of the plurality of mobile structures to be used for delivery of the plurality of objects, mobile-structure route information including logistics centers, depositories, and delivery destinations in which each of the plurality of mobile structures engages, a total volume of the objects that each of the plurality of mobile structures delivers, and a load handling time of each of the plurality of mobile structures, the load handling time corresponding to the mobile-structure route information, wherein the mathematical model is given, as inputs, at least

location information of each of the plurality of logistics centers, the plurality of depositories, and the plurality of delivery destinations, delivery-object information including a quantity, a collecting location, and a delivery destination of each of the plurality of objects to be delivered per day, delivery-time information representing delivery times at two locations, selected from the plurality of logistics centers, the plurality of depositories, and the plurality of delivery destinations, on each permutation route, and maximum loading-capacity information of each of the plurality of mobile structures; and

an output function to output the number of the plurality of mobile structures, the mobile-structure route information, the total volume, and the load handling time.

# FIG.1

# FIG.2

| NAME | ADDRESS | LATITUDE | LONGITUDE |
|---|---|---|---|
| LOGISTICS CENTER A | ···a1, a1-CITY, A-PREFECTURE | 34.a1a1 | 137.a1a1 |
| LOGISTICS CENTER B | ···b1, b1-CITY, A-PREFECTURE | 34.b1b1 | 137.b1b1 |
| LOGISTICS CENTER C | ···c1, c1-COUNTY, A-PREFECTURE | 34.c1c1 | 137.c1c1 |
| LOGISTICS CENTER D | ···d1, d1-CITY, A-PREFECTURE | 34.d1d1 | 137.d1d1 |
| LOGISTICS CENTER E | ···e1, e1-CITY, B-PREFECTURE | 34.e1e1 | 137.e1e1 |
| ⋮ | ⋮ | ⋮ | ⋮ |
| DEPOSITORY A | ···a2, a2-CITY, A-PREFECTURE | 34.a2a2 | 137.a2a2 |
| DEPOSITORY B | ···b2, b2-CITY, A-PREFECTURE | 34.b2b2 | 137.b2b2 |
| DEPOSITORY C | ···c2, c2-COUNTY, A-PREFECTURE | 34.c2c2 | 137.c2c2 |
| DEPOSITORY D | ···d2, d2-CITY, A-PREFECTURE | 35.d2d2 | 137.d2d2 |
| DEPOSITORY E | ···e2, e2-CITY, B-PREFECTURE | 34.e2e2 | 137.e2e2 |
| ⋮ | ⋮ | ⋮ | ⋮ |
| FACTORY A | ···a3, a3-CITY, A-PREFECTURE | 34.a3a3 | 137.a3a3 |
| FACTORY B | ···b3, b3-CITY, A-PREFECTURE | 34.b3b3 | 137.b3b3 |
| FACTORY C | ···c3, c3-CITY, A-PREFECTURE | 34.c3c3 | 137.c3c3 |
| FACTORY D | ···d3, d3-COUNTY, A-PREFECTURE | 34.d3d3 | 137.d3d3 |
| FACTORY E | ···e3, e3-CITY, B-PREFECTURE | 34.e3e3 | 137.e3e3 |
| ⋮ | ⋮ | ⋮ | ⋮ |

# FIG.3

| COMPONENT NUMBER | BOX VOLUME [m³] | NUMBER OF COMPONENTS PER BOX | WEIGHT [kg] | NUMBER OF BOXES | VOLUME PER DAY [m³] | DEPOSITORY | DELIVERY DESTINATION |
|---|---|---|---|---|---|---|---|
| abcde-11111 | 0.0218839 | 4 | 9.32 | 216 | 4.726917 | DEPOSITORY A | FACTORY A |
| abcde-11112 | 0.0218839 | 3 | 11.4 | 6 | 0.1313033 | DEPOSITORY A | FACTORY A |
| abcde-11113 | 0.0218839 | 4 | 8.66 | 14 | 0.3063743 | DEPOSITORY A | FACTORY A |
| abcde-11114 | 0.0218839 | 4 | 9.46 | 65 | 1.4224519 | DEPOSITORY A | FACTORY A |
| abcde-11115 | 0.0218839 | 4 | 9.06 | 215 | 4.7050331 | DEPOSITORY A | FACTORY A |
| abcde-11116 | 0.0218839 | 3 | 7.14 | 6 | 0.1313033 | DEPOSITORY A | FACTORY A |
| abcde-11117 | 0.0218839 | 6 | 14.84 | 14 | 0.3063743 | DEPOSITORY A | FACTORY A |
| abcde-11118 | 0.0218839 | 6 | 14 | 48 | 1.050426 | DEPOSITORY A | FACTORY A |
| abcde-11119 | 0.0218839 | 6 | 14.36 | 137 | 2.9980909 | DEPOSITORY A | FACTORY A |
| abcde-11120 | 0.029403 | 3 | 12.87 | 151 | 4.4398455 | DEPOSITORY A | FACTORY A |
| bcdef-11111 | 0.029403 | 3 | 12.87 | 0 | 0 | DEPOSITORY A | FACTORY A |
| bcdef-11112 | 0.029403 | 3 | 12.87 | 69 | 2.0288036 | DEPOSITORY A | FACTORY A |
| bcdef-11113 | 0.029403 | 3 | 12.87 | 2 | 0.0588059 | DEPOSITORY A | FACTORY A |
| bcdef-11114 | 0.029403 | 3 | 12.87 | 6 | 0.1764177 | DEPOSITORY A | FACTORY A |
| bcdef-11115 | 0.0242406 | 200 | 10.6 | 2 | 0.0484812 | DEPOSITORY B | FACTORY B |
| bcdef-11116 | 0.0242406 | 200 | 9.8 | 3 | 0.0727218 | DEPOSITORY B | FACTORY B |
| bcdef-11117 | 0.0242406 | 3 | 11.51 | 6 | 0.1454436 | DEPOSITORY C | FACTORY C |
| bcdef-11118 | 0.0242406 | 3 | 11.68 | 0 | 0 | DEPOSITORY C | FACTORY C |
| bcdef-11119 | 0.0242406 | 3 | 12.05 | 261 | 6.3267966 | DEPOSITORY C | FACTORY C |
| bcdef-11120 | 0.0242406 | 3 | 11.81 | 45 | 1.090827 | DEPOSITORY C | FACTORY C |
| cdefg-11111 | 0.0242406 | 3 | 11.81 | 6 | 0.1454436 | DEPOSITORY C | FACTORY C |
| cdefg-11112 | 0.0242406 | 3 | 8.36 | 6 | 0.1454436 | DEPOSITORY C | FACTORY C |
| cdefg-11113 | 0.0242406 | 3 | 7.93 | 6 | 0.1454436 | DEPOSITORY C | FACTORY C |
| cdefg-11114 | 0.0242406 | 3 | 7.16 | 305 | 7.393383 | DEPOSITORY C | FACTORY C |
| cdefg-11114 | 0.029403 | 3 | 12.78 | 55 | 1.6171623 | DEPOSITORY C | FACTORY C |
| cdefg-11115 | 0.029403 | 3 | 13.01 | 261 | 7.67417 | DEPOSITORY C | FACTORY C |
| cdefg-11116 | 0.0242406 | 200 | 11.96 | 2 | 0.0484812 | DEPOSITORY D | FACTORY D |
| cdefg-11117 | 0.0242406 | 200 | 11.96 | 5 | 0.121203 | DEPOSITORY D | FACTORY D |

LC: LOGISTICS CENTER  DP: DEPOSITORY

# FIG.4

LC: LOGISTICS CENTER  DP: DEPOSITORY

UNIT: SECOND

| | | PLACE OF ARRIVAL | | | | | | | | | | | | | |
| --- | --- | --- | --- | --- | --- | --- | --- | --- | --- | --- | --- | --- | --- | --- | --- |
| | | LC A | LC B | LC C | LC D | LC E | LC F | LC G | LC H | LC I | LC J | LC K | LC L | LC M | LC N | ... |
| PLACE OF DEPAR-TURE | LC A | 0 | 2958 | 4710 | 968 | 410 | 2227 | 2363 | 4738 | 2990 | 974 | 4558 | 3438 | 878 | 878 | ... |
| | LC B | 2482 | 0 | 3143 | 1854 | 2597 | 1049 | 398 | 3171 | 31 | 1859 | 2991 | 3141 | 1968 | 1968 | ... |
| | LC C | 4578 | 3232 | 0 | 3950 | 4693 | 3531 | 3381 | 61 | 3264 | 3955 | 397 | 6063 | 4064 | 4064 | ... |
| | LC D | 899 | 1987 | 4228 | 0 | 1013 | 1955 | 2278 | 4256 | 2018 | 79 | 4076 | 4076 | 384 | 384 | ... |
| | LC E | 485 | 2766 | 4826 | 1084 | 0 | 2510 | 2695 | 4854 | 2797 | 1090 | 4674 | 3770 | 994 | 994 | ... |
| | LC F | 2213 | 1108 | 3576 | 1789 | 2376 | 0 | 1396 | 3604 | 1139 | 1795 | 3424 | 3090 | 1780 | 1780 | ... |
| | LC G | 2209 | 407 | 3317 | 2141 | 2465 | 1378 | 0 | 3345 | 377 | 2147 | 3165 | 2924 | 2256 | 2256 | ... |
| | LC H | 4610 | 3264 | 57 | 3981 | 4725 | 3563 | 3413 | 0 | 3296 | 3987 | 426 | 6095 | 4096 | 4096 | ... |
| | LC I | 2512 | 30 | 3172 | 1883 | 2627 | 1079 | 367 | 3200 | 0 | 1889 | 3021 | 3110 | 1997 | 1997 | ... |
| | LC J | 801 | 1889 | 3949 | 99 | 916 | 1857 | 2180 | 3977 | 1920 | 0 | 3797 | 3978 | 286 | 286 | ... |
| | LC K | 4473 | 3127 | 428 | 3844 | 4587 | 3425 | 3276 | 456 | 3158 | 3850 | 0 | 5958 | 3958 | 3958 | ... |
| | LC L | 3159 | 3030 | 5719 | 3722 | 3414 | 2772 | 2794 | 5747 | 3001 | 3728 | 5567 | 0 | 3633 | 3633 | ... |
| | LC M | 514 | 2230 | 4290 | 548 | 629 | 2058 | 2521 | 4318 | 2261 | 554 | 4139 | 3692 | 0 | 0 | ... |
| | LC N | 514 | 2230 | 4290 | 548 | 629 | 2058 | 2521 | 4318 | 2261 | 554 | 4139 | 3692 | 0 | 0 | ... |
| | DP A | 2794 | 657 | 3570 | 1875 | 2832 | 821 | 945 | 3598 | 688 | 1881 | 3418 | 3547 | 1997 | 1997 | ... |
| | DP B | 2794 | 657 | 3570 | 1875 | 2832 | 821 | 945 | 3598 | 688 | 1881 | 3418 | 3547 | 1997 | 1997 | ... |
| | DP C | 2363 | 60 | 3157 | 1913 | 2657 | 1109 | 335 | 3185 | 30 | 1919 | 3005 | 3078 | 2027 | 2027 | ... |
| | DP D | 4757 | 3411 | 278 | 4128 | 4872 | 3710 | 3560 | 306 | 3443 | 4134 | 574 | 6242 | 4243 | 4243 | ... |
| | DP E | 2051 | 1921 | 3268 | 1423 | 2166 | 2189 | 2052 | 3296 | 1952 | 1429 | 3116 | 4795 | 1537 | 1537 | ... |
| | DP F | 1444 | 2064 | 3854 | 763 | 1559 | 2357 | 2355 | 3882 | 2095 | 672 | 3702 | 4621 | 929 | 929 | ... |
| | DP G | 3874 | 3746 | 6434 | 4438 | 4130 | 3487 | 3510 | 6462 | 3716 | 4444 | 6283 | 1071 | 4348 | 4348 | ... |
| | DP H | 1814 | 3170 | 5445 | 2460 | 2098 | 2498 | 2933 | 5473 | 3140 | 2466 | 5293 | 4008 | 2371 | 2371 | ... |
| | DP I | 39 | 2989 | 4748 | 1006 | 378 | 2258 | 2402 | 4777 | 3021 | 1012 | 4597 | 3477 | 917 | 917 | ... |
| | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |

EP 4 424 620 A1

# FIG.5

START

ACQUIRE LOCATION INFORMATION, DELIVERY-OBJECT INFORMATION, DELIVERY-TIME INFORMATION, AND MAXIMUM TRUCK CAPACITY ~S1

COMPUTATION BY QUANTUM COMPUTER USING MATHEMATICAL MODEL, INCLUDING SETTING PARAMETERS D, T, L, AND $D_n$, NUMBER OF TRUCKS, TOTAL VOLUME OF COMPONENTS ON EACH TRUCK, AND DELIVERY ROUTES AND LOAD HANDLING TIME OF EACH TRUCK ~S2

OUTPUT NUMBER OF TRUCKS, TOTAL VOLUME OF COMPONENTS ON EACH TRUCK, AND DELIVERY ROUTES AND LOAD HANDLING TIME OF EACH TRUCK ~S3

COMPUTE TRAVEL TIME AND LOADING CAPACITY OF EACH TRUCK ~S4

OUTPUT RESULT OF COMPUTATION ~S5

END

# FIG.6

# FIG.7

| TRUCK 1 | TRUCK 2 | TRUCK 3 | TRUCK 4 | TRUCK 5 | TRUCK 6 | TRUCK 7 | TRUCK 8 | TRUCK 9 | TRUCK 10 | TRUCK 11 | TRUCK 12 | TRUCK 13 | TRUCK 14 | TRUCK 15 |
|---|---|---|---|---|---|---|---|---|---|---|---|---|---|---|
|  | LC A | LC A | LC A | LC A | LC A | LC A | LC A | LC A | LC A | LC A | LC A | LC C | LC A | LC A |
| LC B | LC C | LC B | LC C | DP B | LC C | DP A | DP C | LC C | LC C | DP B | FA B | FA D | LC B | DP D |
| FA C | FA A | FA C | DP D | FA B | FA D | FA B | FA C | FA A | FA D | FA B | FA C | DP C | FA C | FA D |
| LC A | LC A | LC A | FA D | LC A | LC A | LC A | LC A | LC A | LC A | LC A | LC A | FA C | LC A | LC A |
| LC B | LC C | LC B | LC A | DP B | LC C | DP A | DP C | LC C | LC C | DP B | FA B | LC C | LC B | DP D |
| FA C | FA A | FA C | LC C | FA B | FA D | FA B | FA C | FA A | FA D | FA B | FA C | FA D | FA C | FA D |
| LC A | LC A | LC A | DP D | LC A | LC A | LC A | LC A | LC A | LC A | LC A | LC A | DP C | LC A | LC A |
| LC B | LC C | LC B | FA D | DP B | LC C | DP A | DP C | LC C | LC C | DP B | FA B | FA C | LC B | DP D |
| FA C | FA A | FA C | LC A | FA B | FA D | FA B | FA C | FA A | FA D | FA B | FA C | LC C | FA C | FA D |
| LC A | LC A | LC A | LC C | LC A | LC A | LC A | LC A | LC A | LC A | LC A | LC A | FA D | LC A | LC A |
| LC B | LC C | LC B | DP D | DP B | LC C | DP A | DP C | LC C | LC C | DP B | FA B | DP C | LC B | DP D |
| FA C | FA A | FA C | FA D | FA B | FA D | FA B | FA C | FA A | FA D | FA B | FA C | FA C | FA C | FA D |
| LC A | LC A | LC A | LC A | LC A | LC A | LC A | LC A | LC A | LC A | LC A | LC A | LC C | LC A | LC A |
| LC B | LC C | LC B | LC C | DP B | LC C | DP A | DP C | LC C | LC C | DP B | FA B | FA D | LC B | DP D |
| FA C | FA A | FA C | DP D | FA B |  | FA B | FA C | FA A |  | FA B | FA C | DP C | FA C |  |
| LC A | LC A | LC A | FA D | LC A |  | LC A | LC A | LC A |  | LC A | LC A | FA C | LC A |  |
| LC B | LC C | LC B | LC A | DP B |  | DP A | DP C | LC C |  | DP B | FA B | LC C | LC B |  |
| FA C | FA A | FA C |  | FA B |  | FA B | FA C | FA A |  | FA B | FA C | FA D | FA C |  |
| LC A | LC A | LC A |  | LC A |  | LC A | LC A | LC A |  | LC A | LC A | DP C | LC A |  |
| LC B | LC C | LC B |  |  |  | DP A | DP C | LC C |  |  | FA B | FA C | LC B |  |
|  | FA A |  |  |  |  | FA B |  | FA A |  |  |  |  |  |  |
|  | LC A |  |  |  |  | LC A |  | LC A |  |  |  |  |  |  |
|  | LC C |  |  |  |  | DP A |  | LC C |  |  |  |  |  |  |
|  | FA A |  |  |  |  | FA B |  | FA A |  |  |  |  |  |  |
|  | LC A |  |  |  |  | LC A |  | LC A |  |  |  |  |  |  |
|  | LC C |  |  |  |  | DP A |  | LC C |  |  |  |  |  |  |
|  | FA A |  |  |  |  | FA B |  | FA A |  |  |  |  |  |  |
|  | LC A |  |  |  |  | LC A |  | LC A |  |  |  |  |  |  |
|  | LC C |  |  |  |  | DP A |  | LC C |  |  |  |  |  |  |
|  | FA A |  |  |  |  | FA B |  | FA A |  |  |  |  |  |  |
|  | LC A |  |  |  |  | LC A |  | LC A |  |  |  |  |  |  |
|  | LC C |  |  |  |  | DP A |  | LC C |  |  |  |  |  |  |
|  | FA A |  |  |  |  | FA B |  | FA A |  |  |  |  |  |  |

EP 4 424 620 A1

# FIG.8

| TIME | LOCATION | abcde-11111 LOAD | abcde-11111 UNLOAD | bcdef-11111 LOAD | bcdef-11111 UNLOAD |
|---|---|---|---|---|---|
| 2021/2/25 9:00 | LOGISTICS CENTER B | 20 | 0 | 1 | 0 |
| 2021/2/25 10:18 | LOGISTICS CENTER A | 0 | 20 | 0 | 1 |
| 2021/2/25 10:36 | DEPOSITORY C | 0 | 0 | 0 | 0 |
| 2021/2/25 10:59 | FACTORY A | 0 | 0 | 0 | 0 |
| 2021/2/25 13:35 | LOGISTICS CENTER B | 0 | 0 | 0 | 0 |
| 2021/2/25 15:10 | LOGISTICS CENTER A | 2 | 0 | 0 | 0 |
| 2021/2/25 15:28 | DEPOSITORY C | 0 | 0 | 0 | 0 |
| 2021/2/25 15:51 | FACTORY A | 0 | 2 | 0 | 0 |
| 2021/2/25 17:27 | LOGISTICS CENTER B | 18 | 0 | 0 | 0 |
| 2021/2/25 22:03 | LOGISTICS CENTER A | 13 | 18 | 0 | 0 |
| 2021/2/25 22:21 | DEPOSITORY B | 0 | 0 | 0 | 0 |
| 2021/2/25 22:44 | FACTORY A | 0 | 13 | 0 | 0 |
| 2021/2/26 1:20 | LOGISTICS CENTER B | 17 | 0 | 0 | 0 |
| 2021/2/26 2:55 | LOGISTICS CENTER A | 18 | 17 | 0 | 0 |
| 2021/2/26 3:13 | DEPOSITORY A | 0 | 0 | 0 | 0 |
| 2021/2/26 3:36 | FACTORY A | 0 | 18 | 0 | 0 |
| 2021/2/26 5:12 | LOGISTICS CENTER B | 0 | 0 | 0 | 0 |

EP 4 424 620 A1

FIG.9

VOLUME [m³]　　　　　　　LOADING CAPACITY　　　　　FIG.10

TRUCK NUMBER

EP 4 424 620 A1

# FIG.11

## INTERNATIONAL SEARCH REPORT

| International application No. |
|---|
| **PCT/JP2022/033794** |

**A. CLASSIFICATION OF SUBJECT MATTER**

***B65G 61/00***(2006.01)i
FI:    B65G61/00 530

According to International Patent Classification (IPC) or to both national classification and IPC

**B. FIELDS SEARCHED**

Minimum documentation searched (classification system followed by classification symbols)

B65G61/00; G01C21/00-21/36; G06Q10/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-11334 A (ZENRIN DATACOM CO LTD) 04 February 2021 (2021-02-04) | 1-12 |
| A | JP 2014-159962 A (MICWARE CO LTD) 04 September 2014 (2014-09-04) | 1-12 |
| A | JP 2019-112226 A (YAMATO TRANSPORT CO LTD) 11 July 2019 (2019-07-11) | 1-12 |
| A | JP 2010-224660 A (HITACHI LTD) 07 October 2010 (2010-10-07) | 1-12 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2022/033794** |

| Patent document cited in search report | | | Publication date (day/month/year) | Patent family member(s) | Publication date (day/month/year) |
|---|---|---|---|---|---|
| JP | 2021-11334 | A | 04 February 2021 | (Family: none) | |
| JP | 2014-159962 | A | 04 September 2014 | (Family: none) | |
| JP | 2019-112226 | A | 11 July 2019 | (Family: none) | |
| JP | 2010-224660 | A | 07 October 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4116478 B

- JP 5678563 B